# EUROPEAN PATENT SPECIFICATION

(11) **EP 2 610 464 B1**
(45) Date of publication and mention of the grant of the patent: **31.10.2018**
(21) Application number: 12198045.2
(22) Date of filing: 19.12.2012
(51) Int. Cl.: F02C 3/107, F02K 3/06, F02C 7/36

(54) **Gas Turbine engine**
Gasturbinenmotor
Moteur de turbine à gaz

(30) Priority: 30.12.2011 US 201113340743
(43) Date of publication of application: 03.07.2013
(73) Proprietor: United Technologies Corporation, Farmington, CT 06032 (US)
(72) Inventor: McCune, Michael E., Colchester, CT 06415 (US); Portlock, Lawrence E., Bethany, CT 06524 (US); Schwarz, Frederick M., Glastonbury, CT 06033 (US)
(74) Representative: Dehns

(56) References cited:
- US-A- 3 747 343
- US-A- 6 158 210
- US-A1- 2008 006 018
- US-A1- 2009 081 039

## Description

### BACKGROUND OF THE INVENTION

This invention relates to a gas turbine engine comprising an epicyclic gear train.

Gas turbine engines typically employ an epicyclic gear train connected to the turbine section of the engine, which is used to drive the turbo fan. In a typical epicyclic gear train, a sun gear receives rotational input from a turbine shaft through a compressor shaft. A carrier supports intermediate gears that surround and mesh with the sun gear. A ring gear surrounds and meshes with the intermediate gears. In arrangements in which the carrier is fixed against rotation, the intermediate gears are referred to as "star" gears and the ring gear is coupled to an output shaft that supports the turbo fan.

Typically, the ring gear is connected to the turbo fan shaft using a spline ring. The spline ring is secured to a flange of the turbo fan shaft using circumferentially arranged bolts. The spline ring includes splines opposite the flange that supports a splined outer circumferential surface of the ring gear. The ring gear typically includes first and second portions that provide teeth facing in opposite directions, which mesh with complimentary oppositely facing teeth of the star gears.

An epicyclic gear train must share the load between the gears within the system. As a result, the splined connection between the ring gear and spline ring is subject to wear under high loads and deflection. Since the spline connection requires radial clearance, it is difficult to get a repeatable balance of the turbo fan assembly. Balance can also deteriorate over time with spline wear.

A turbine engine having the features of the preamble of claim 1 is disclosed in US-2009/0081039-A1. Another engine is shown in US-6158210.

### SUMMARY OF THE INVENTION

According to the present invention, there is provided turbine engine as claimed in claim 1.

Although different examples have the specific components shown in the illustrations, embodiments of this invention are not limited to those particular combinations. It is possible to use some of the components or features from one of the examples in combination with features or components of another of the examples.

These and other features disclosed herein can be best understood from the following specification and drawings, the following of which is a brief description.

### BRIEF DESCRIPTION OF THE DRAWINGS

Figure 1 is a partial cross-sectional view of a front portion of a gas turbine engine illustrating a turbo fan, epicyclic gear train and a compressor section.
Figure 2 is an enlarged cross-sectional view of the epicyclic gear train shown in Figure 1.
Figure 3 is an enlarged cross-sectional view of an example ring gear similar to the arrangement shown in Figure 2.
Figure 4 is a view of the ring gear shown in Figure 3 viewed in a direction that faces the teeth of the ring gear in Figure 3.

### DETAILED DESCRIPTION

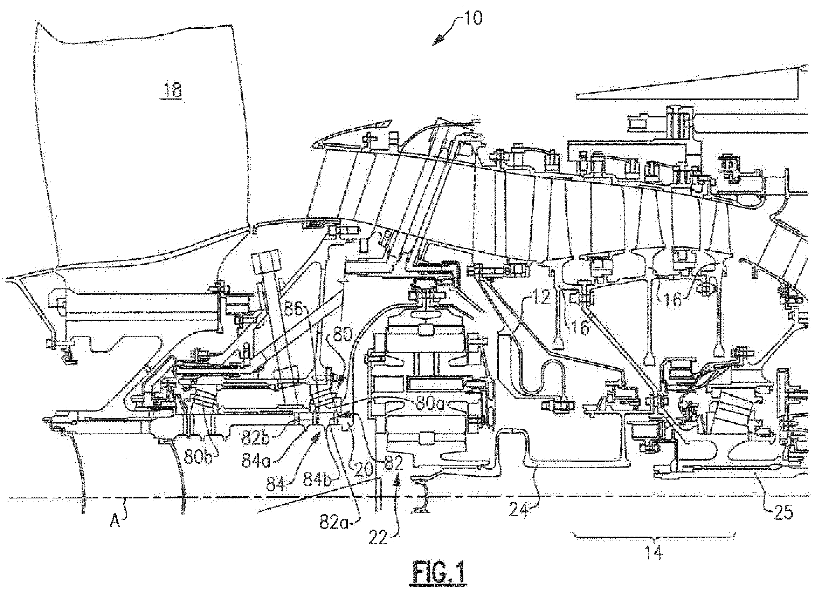

A portion of a gas turbine engine 10 is shown schematically in Figure 1. The turbine engine 10 includes a fixed housing 12 that is constructed from numerous pieces secured to one another. A compressor section 14 having compressor hubs 16 with blades are driven by a turbine shaft 25 about an axis A. A turbo fan 18 is supported on a turbo fan shaft 20 that is driven by a compressor shaft 24, which supports the compressor hubs 16, through an epicyclic gear train 22.

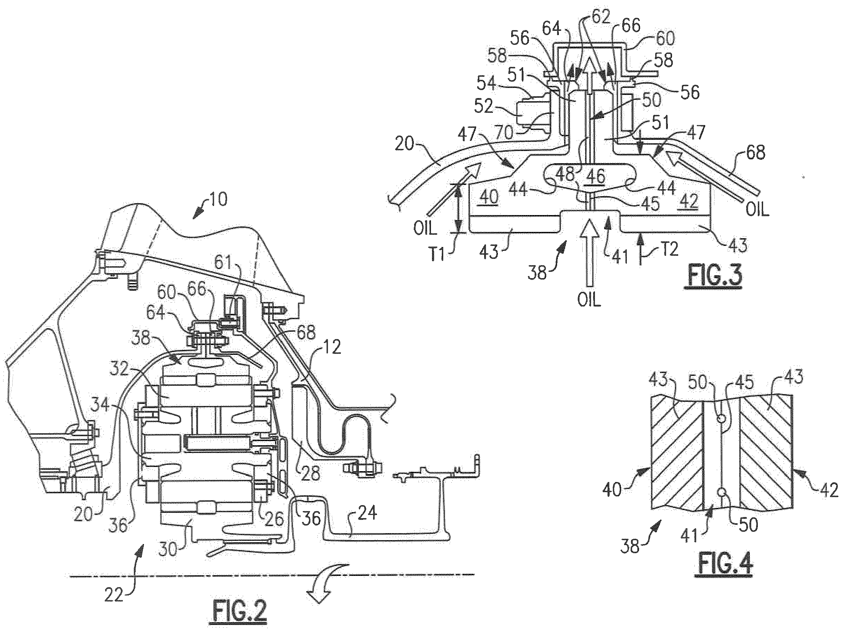

In the example arrangement shown, the epicyclic gear train 22 is a star gear train. Referring to Figure 2, the epicyclic gear train 22 includes a sun gear 30 that is connected to the compressor shaft 24, which provides rotational input, by a splined connection. A carrier 26 is fixed to the housing 12 by a torque frame 28 using fingers (not shown) known in the art. The carrier 26 supports star gears 32 using journal bearings 34 that are coupled to the sun gear 30 by meshed interfaces between the teeth of sun and star gears 30, 32. Multiple star gears 32 are arranged circumferentially about the sun gear 30. Retainers 36 retain the journal bearings 34 to the carrier 26. A ring gear 38 surrounds the carrier 26 and is coupled to the star gears 32 by meshed interfaces. The ring gear 38, which provides rotational output, is secured to the turbo fan shaft 20 by circumferentially arranged fastening elements, which are described in more detail below.

As shown, the fan shaft 20 is coupled to the ring gear 38 of the epicyclic gear train 22 and the fan 18 is mounted for rotation on the fan shaft 20. The fan 18 is supported on two tapered roller bearings 80 (Figure 1). As shown, the tapered roller bearings 80 include tapered races such that axes of rotation of rollers supported on the races are transversely angled relative to the axis A of the engine 10.

There is a first tapered roller bearing 80a and a second, axially spaced tapered roller bearing 80b. The fan shaft 20 includes radially extending passages 82 adjacent and in communication with the tapered bearings 80. The at least one radially extending passage 82 includes a first passage 82a and a second passage 82b. The first passage 82a is located at an axially aft side of the first tapered bearing 80a and the second passage 82b is located at an axially forward side of the first tapered bearing 80a, to provide lubricant to the first tapered bearing 80a. That is, lubricant is provided to the radial interior portion of the fan shaft 20, to lubricate and cool the first tapered bearing 80a. It is to be understood that the second tapered bearing 80b is similarly arranged with regard to additional radially extending passages through the fan shaft 20.

As shown in Figure 1, the fan shaft 20 includes, on a radially inner surface, at least one well 84 that extends between axial side walls 84a/84b and a radial wall 86. The at least one passage 82 opens at the radial side 86. In this example, there are two wells that feed, respectively, the first passage 82a and the second passage 82b. The two wells are axially adjacent such that they share a common axial side wall 84b. The axial side walls 84a/84b are gradually sloped to funnel lubricant to the radial wall 86 and thus into the corresponding passage 82a or 82b, for example.

In one disclosed, non-limiting embodiment, the engine 10 has a bypass ratio that is greater than about six (6:1) to ten (10:1), the epicyclic gear train 22 is a planetary gear system or other gear system with a gear reduction ratio of greater than 2.5, and a low pressure turbine of the engine 10 has a pressure ratio that is greater than five (5:1). In one disclosed embodiment, the engine 10 bypass ratio is greater than ten (10:1) or greater than 10.5:1, the turbofan 18 diameter is significantly larger than that of the low pressure compressor of the compressor section 14, and the low pressure turbine has a pressure ratio that is greater than five (5:1). In one example, the epicyclic gear train 22 has a gear reduction ratio of greater than about 2.3:1 or greater than 2.5:1.

A significant amount of thrust is provided by a bypass flow B due to the high bypass ratio. The fan 18 of the engine 10 is designed for a particular flight condition -- typically cruise at about 0.8M and about 35,000 feet (10,668 m). The flight condition of 0.8 M and 35,000 ft (10,668 m), with the engine at its best fuel consumption - also known as "bucket cruise TSFC" - is the industry standard parameter of lbm of fuel being burned divided by lbf of thrust the engine produces at that minimum point. "Low fan pressure ratio" is the pressure ratio across the fan blade alone. The low fan pressure ratio as disclosed herein is less than 1.45. "Low corrected fan tip speed" is the actual fan tip speed in ft/sec divided by an industry standard temperature correction of [(Tambient deg R) / 518.7)^0.5]. The "Low corrected fan tip speed" as disclosed herein according to one non-limiting embodiment is less than about 1150 ft / second (350.5 m/s).

Referring to Figures 3 and 4, the ring gear 38 is a two-piece construction having first and second portions 40, 42. The first and second portions 40, 42 abut one another at a radial interface 45. A trough 41 separates oppositely angled teeth 43 (best shown in Figure 4) on each of the first and second portions 40, 42. The arrangement of teeth 43 forces the first and second portions 40, 42 toward one another at the radial interface 45. The back side of the first and second portions 40, 42 includes a generally S-shaped outer circumferential surface 47 that, coupled with a change in thickness, provides structural rigidity and resistance to overturning moments. The first and second portions 40, 42 have a first thickness T1 that is less than a second thickness T2 arranged axially inwardly from the first thickness T1. The first and second portions 40, 42 include facing recesses 44 that form an internal annular cavity 46.

The first and second portions 40, 42 include flanges 51 that extend radially outward away from the teeth 43. The turbo fan shaft 20 includes a radially outwardly extending flange 70 that is secured to the flanges 51 by circumferentially arranged bolts 52 and nuts 54, which axially constrain and affix the turbo fan shaft 20 and ring gear 38 relative to one another. Thus, the spline ring is eliminated, which also reduces heat generated from windage and churning that resulted from the sharp edges and surface area of the splines. The turbo fan shaft 20 and ring gear 38 can be rotationally balanced with one another since radial movement resulting from the use of splines is eliminated. An oil baffle 68 is also secured to the flanges 51, 70 and balanced with the assembly.

Seals 56 having knife edges 58 are secured to the flanges 51, 70. The first and second portions 40, 42 have grooves 48 at the radial interface 45 that form a hole 50, which expels oil through the ring gear 38 to a gutter 60 that is secured to the carrier 26 with fasteners 61 (Figure 2). The direct radial flow path provided by the grooves 48 reduces windage and churning by avoiding the axial flow path change that existed with splines. That is, the oil had to flow radially and then axially to exit through the spline interface. The gutter 60 is constructed from a soft material such as aluminum so that the knife edges 58, which are constructed from steel, can cut into the aluminum if they interfere. Referring to Figure 3, the seals 56 also include oil return passages 62 provided by first and second slots 64 in the seals 56, which permit oil on either side of the ring gear 38 to drain into the gutter 60. In the example shown in Figure 2, the first and second slots 64, 66 are instead provided in the flange 70 and oil baffle 68, respectively.

Although embodiments of this invention have been disclosed, a worker of ordinary skill in this art would recognize that certain modifications would come within the scope of this invention. For that reason, the following claims should be studied to determine the true scope and content of this invention.

## Claims

1. A turbine engine (10) comprising:
a fan shaft (20);
a fan (18); and
an epicyclic gear train (22) coupled to drive the fan (18), the epicyclic gear train (22) including a carrier (26), supporting intermediate gears (32) that mesh with a sun gear (30), and a ring gear (38) surrounding and meshing with the intermediate gears (32),
**characterised in that**:
each of the intermediate gears (32) is supported on a respective journal bearing (34);
the epicyclic gear train (22) defines a gear reduction ratio of greater than or equal to 2.5;
the engine (10) further comprises at least one tapered bearing (80) mounted on the fan shaft (20);
the fan shaft (20) includes at least one radially extending passage (82) adjacent the at least one tapered bearing (80);
the at least one tapered bearing (80) includes a first tapered bearing (80a) and a second, axially spaced tapered roller bearing (80b), and the at least one radially extending passage (82) includes:
a first passage (82a) and a second passage (82b), the first passage (82a) being located at an axially forward side of the first tapered bearing (80a) and the second passage (82b) being located at an axially aft side of the first tapered bearing (80a); and
a third passage and a fourth passage, the third passage being located at an axially forward side of the second tapered bearing (80b) and the fourth passage being located at an axially aft side of the second tapered bearing (80b); and
the fan (18) has a pressure ratio that is less than 1.45 during operation and is mounted for rotation on the tapered bearing (80).

2. The turbine engine (10) as recited in claim 1, wherein the fan shaft (20) is coupled to the ring gear (38).

3. The turbine engine (10) as recited in claim 1 or 2, wherein the fan shaft (20) includes, on a radially inner surface, at least one well (84) extending between axial sides (84a, 84b) and a radial side (86), and the at least one radially extending passage (82) opens at the radial side (86).

4. The turbine engine (10) as recited in claim 1 or 2, wherein the fan shaft (20) includes, on a radially inner surface, a plurality of wells (84) each extending between axial side walls (84a,84b) and a radial side wall (86), and the at least one radially extending passage (82) includes a plurality of passages (82a,82b) that open at respective ones of the radial side walls (86) of the plurality of wells (84).

5. The turbine engine (10) as recited in claim 4, wherein two wells (84) of the plurality of wells are axially adjacent such that the two wells (84) share a common axial side wall (84b).

6. The turbine engine (10) as recited in claim 4 or 5, wherein the axial side walls (84a, 84b) are gradually sloped.

7. The turbine engine (10) as recited in any preceding claim, wherein the intermediate gears (32) comprise star gears.

8. The turbine engine (10) as recited in any preceding claim, wherein the fan (18) defines a bypass ratio of greater than ten with regard to a bypass airflow and a core airflow.

9. The turbine engine (10) as recited in any preceding claim, wherein the fan (18) defines a bypass ratio of greater than 10.5:1 with regard to a bypass airflow and a core airflow.

10. The turbine engine (10) as recited in any preceding claim, further comprising a turbine section including a low pressure turbine having a pressure ratio of greater than five.

11. The turbine engine (10) as recited in any preceding claim, wherein the fan (18) has a low corrected fan tip speed of less than 1150 ft/second (350.5 m/second).

## Patentansprüche

1. Turbinenmotor (10), der Folgendes umfasst:
eine Lüfterwelle (20);
einen Lüfter (18); und
einen Umlaufgetriebezug (22), der gekoppelt ist, um den Lüfter (18) anzutreiben, wobei der Umlaufgetriebezug (22) einen Träger (26), der Zwischenzahnräder (32) stützt, die sich mit einem Sonnenzahnrad (30) verzahnen, und ein Hohlrad (38), das die Zwischenzahnräder (32) umgibt und sich mit ihnen verzahnt, einschließt,
**dadurch gekennzeichnet, dass**:
jedes der Zwischenzahnräder (32) auf einem jeweiligen Traglager (34) gestützt wird;
der Umlaufgetriebezug (22) ein Getriebeuntersetzungsverhältnis definiert, das größer als oder gleich 2,5 ist;
der Motor (10) ferner wenigstens ein Kegellager (80) umfasst, das auf der Lüfterwelle (20) montiert ist;
die Lüfterwelle (20) wenigstens einen sich radial erstreckenden Durchgang (82) einschließt, der dem wenigstens einen Kegellager (80) benachbart ist;
das wenigstens eine Kegellager (80) ein erstes Kegellager (80a) und ein zweites, axial beabstandetes Kegelrollenlager (80b) einschließt, und der wenigstens eine sich radial erstreckende Durchgang (82) Folgendes einschließt:
einen ersten Durchgang (82a) und einen zweiten Durchgang (82b), wobei der erste Durchgang (82a) an einer axialen Vorderseite des ersten Kegellagers (80a) positioniert ist und der zweite Durchgang (82b) an einer axialen Hinterseite des ersten Kegellagers (80a) positioniert ist; und
einen dritten und einen vierten Durchgang, wobei der dritte Durchgang an einer axialen Vorderseite des zweiten Kegellagers (80b) positioniert ist und der vierte Durchgang an einer axialen Hinterseite des zweiten Kegellagers (80b) positioniert ist; und
der Lüfter (18) ein Druckverhältnis aufweist, das während des Betriebs kleiner als 1,45 ist, und drehbar an dem Kegellager (80) montiert ist.

2. Turbinenmotor (10) nach Anspruch 1, wobei die Lüfterwelle (20) an das Hohlrad (38) gekoppelt ist.

3. Turbinenmotor (10) nach Anspruch 1 oder 2, wobei die Lüfterwelle (20) auf einer radialen Innenfläche wenigstens einen Schacht (84) einschließt, der sich zwischen axialen Seiten (84a, 84b) und einer radialen Seite (86) erstreckt, und wobei der wenigstens eine sich radial erstreckende Durchgang (82) sich an der radialen Seite (86) öffnet.

4. Turbinenmotor (10) nach Anspruch 1 oder 2, wobei die Lüfterwelle (20) auf einer radialen Innenfläche eine Vielzahl von Schächten (84) einschließt, von denen sich jeder zwischen axialen Seitenwänden (84a, 84b) und einer radialen Seitenwand (86) erstreckt, und wobei der wenigstens eine sich radial erstreckende Durchgang (82) eine Vielzahl von Durchgängen (82a, 82b) einschließt, die sich an jeweiligen der radialen Seitenwände (86) der Vielzahl von Schächten (84) öffnen.

5. Turbinenmotor (10) nach Anspruch 4, wobei zwei Schächte (84) der Vielzahl von Schächten axial benachbart sind, sodass die zwei Schächte (84) sich eine gemeinsame axiale Seitenwand (84b) teilen.

6. Turbinenmotor (10) nach Anspruch 4 oder 5, wobei die axialen Seitenwände (84a, 84b) stufenweise geneigt sind.

7. Turbinenmotor (10) nach einem der vorhergehenden Ansprüche, wobei die Zwischenzahnräder (32) Sternzahnräder umfassen.

8. Turbinenmotor (10) nach einem der vorhergehenden Ansprüche, wobei der Lüfter (18) ein Umgehungsverhältnis von größer als zehn in Bezug auf einen Umgehungsluftstrom und einen Kernluftstrom definiert.

9. Turbinenmotor (10) nach einem der vorhergehenden Ansprüche, wobei der Lüfter (18) ein Umgehungsverhältnis von größer als 10,5:1 in Bezug auf einen Umgehungsluftstrom und einen Kernluftstrom definiert.

10. Turbinenmotor (10) nach einem der vorhergehenden Ansprüche, ferner umfassend einen Turbinenbereich, der eine Niederdruckturbine einschließt, die ein Druckverhältnis von größer als fünf aufweist.

11. Turbinenmotor (10) nach einem der vorhergehenden Ansprüche, wobei der Lüfter (18) eine niedrig korrigierte Lüfterspitzengeschwindigkeit von weniger als 1150 ft/second (350,5 m/s) aufweist.

## Revendications

1. Moteur à turbine (10) comprenant :
un arbre de ventilateur (20) ;
un ventilateur (18) ; et
un train épicycloïdal (22) couplé pour entraîner le ventilateur (18), le train épicycloïdal (22) comportant un support (26), supportant des engrenages intermédiaires (32) qui s'engrènent avec un planétaire (30), et une couronne (38) entourant et s'engrenant avec les engrenages intermédiaires (32),
**caractérisé en ce que**
chacun des engrenages intermédiaires (32) est supporté sur un palier lisse (34) respectif ;
le train épicycloïdal (22) définit un rapport de démultiplication supérieur ou égal à 2,5 ;
le moteur (10) comprend en outre au moins un roulement conique (80) monté sur l'arbre de ventilateur (20) ;
l'arbre de ventilateur (20) comporte au moins un passage s'étendant axialement (82) adjacent à l'au moins un roulement conique (80) ;
l'au moins un roulement conique (80) comporte un premier roulement conique (80a) et un second roulement à rouleaux conique espacé axialement (80b), et l'au moins un passage s'étendant radialement (82) comporte :
un premier passage (82a) et un deuxième passage (82b), le premier passage (82a) étant situé sur un côté axialement vers l'avant du premier roulement conique (80a) et le deuxième passage (82b) étant situé sur un côté axialement vers l'arrière du premier roulement conique (80a) ; et
un troisième passage et un quatrième passage, le troisième passage étant situé sur un côté axialement vers l'avant du second roulement conique (80b) et le quatrième passage étant situé sur un côté axialement vers l'arrière du second roulement conique (80b) ; et
le ventilateur (18) a un rapport de pression qui est inférieur à 1,45 pendant le fonctionnement et est monté pour tourner sur le roulement conique (80).

2. Moteur à turbine (10) selon la revendication 1, dans lequel l'arbre de ventilateur (20) est couplé à la couronne (38).

3. Moteur à turbine (10) selon la revendication 1 ou 2, dans lequel l'arbre de ventilateur (20) comporte, sur une surface radialement interne, au moins un puits (84) s'étendant entre des côtés axiaux (84a, 84b) et un côté radial (86), et l'au moins un passage s'étendant radialement (82) s'ouvre sur le côté radial (86).

4. Moteur à turbine (10) selon la revendication 1 ou 2, dans lequel l'arbre de ventilateur (20) comporte, sur une surface radialement interne, une pluralité de puits (84) s'étendant chacun entre des parois côté axial (84a, 84b) et une paroi côté radial (86), et l'au moins un passage s'étendant radialement (82) comporte une pluralité de passages (82a, 82b) qui s'ouvrent sur des parois respectives des parois côté radial (86) de la pluralité de puits (84).

5. Moteur à turbine (10) selon la revendication 4, dans lequel deux puits (84) de la pluralité de puits sont axialement adjacents de telle sorte que les deux puits (84) partagent une paroi côté axial commune (84b).

6. Moteur à turbine (10) selon la revendication 4 ou 5, dans lequel les parois côté axial (84a, 84b) présentent une inclinaison progressive.

7. Moteur à turbine (10) selon une quelconque revendication précédente, dans lequel les engrenages intermédiaires (32) comprennent des engrenages en étoile.

8. Moteur à turbine (10) selon une quelconque revendication précédente, dans lequel le ventilateur (18) définit un rapport de dérivation supérieur à dix par rapport à un flux d'air de dérivation et à un flux d'air central.

9. Moteur à turbine (10) selon une quelconque revendication précédente, dans lequel le ventilateur (18) définit un rapport de dérivation supérieur à 10,5:1 par rapport à un flux d'air de dérivation et à un flux d'air central.

10. Moteur à turbine (10) selon une quelconque revendication précédente, comprenant en outre une section de turbine comportant une turbine basse pression ayant un rapport de pression supérieur à cinq.

11. Moteur à turbine (10) selon une quelconque revendication précédente, dans lequel le ventilateur (18) a une vitesse d'extrémité de pale de ventilateur corrigée faible de moins de 1150 pieds/seconde (350,5 m/seconde).
